**Europäisches Patentamt**

**European Patent Office**

**Office européen des brevets**

(11) Publication number: **0 063 603**
**B1**

(12) **EUROPEAN PATENT SPECIFICATION**

(45) Date of publication of patent specification: **30.12.86**

(21) Application number: **80902068.8**

(22) Date of filing: **31.10.80**

(86) International application number:
**PCT/JP80/00271**

(87) International publication number:
**WO 82/01626 13.05.82 Gazette 82/12**

(51) Int. Cl.⁴: **H 02 K 3/04,** H 02 K 15/04,
H 02 K 23/58

(54) **COIL UNIT OF CORELESS TYPE ARMATURE.**

(43) Date of publication of application:
**03.11.82 Bulletin 82/44**

(45) Publication of the grant of the patent:
**30.12.86 Bulletin 86/52**

(84) Designated Contracting States:
**FR**

(56) References cited:
**GB-A- 177 851**
**GB-A- 714 677**
**GB-A-1 029 798**
**GB-A-1 051 467**
**JP-A-55 144 754**
**JP-B-36 011 016**
**JP-B-51 043 561**
**US-A-3 259 768**
**US-A-3 650 021**
**US-A-3 805 104**

**PATENTS ABSTRACTS OF JAPAN, vol. 5, no.
15, January 29, 1981, page (E-43) (687)**

**PATENTS ABSTRACTS OF JAPAN, vol. 5, no.
129, August 19, 1981, page (E-70) (801)**

**PATENTS ABSTRACTS OF JAPAN, vol. 5, no.
205, December 25, 1981, page (E-88) (877)**

(73) Proprietor: **MATSUSHITA ELECTRIC WORKS,
LTD.**
**1048, Oaza-kadoma
Kadoma-shi Osaka 571 (JP)**

(72) Inventor: **NAKAMURA, Yoshimitsu**
**Matsushita Electric Works, Ltd. 1048 Oaza-
Kadoma
Kadoma-shi Osaka 571 (JP)**

(74) Representative: **Casalonga, Axel et al
BUREAU D.A. CASALONGA OFFICE JOSSE &
PETIT Morassistrasse 8
D-8000 München 5 (DE)**

(56) References cited:
**PATENTS ABSTRACTS OF JAPAN, vol. 6, no.
60, April 17, 1982, page (E-102) (938)**

## Description

This invention relates to coil units of coreless armatures used in direct current miniature motors and, more particularly, to a coil unit of coreless armatures which consists of coil elements wound into a cylindrical form at an extremely high density according to the preamble of claim 1.

The state of the art and present invention shall be explained in the followings with reference to the drawings for their easy understanding.

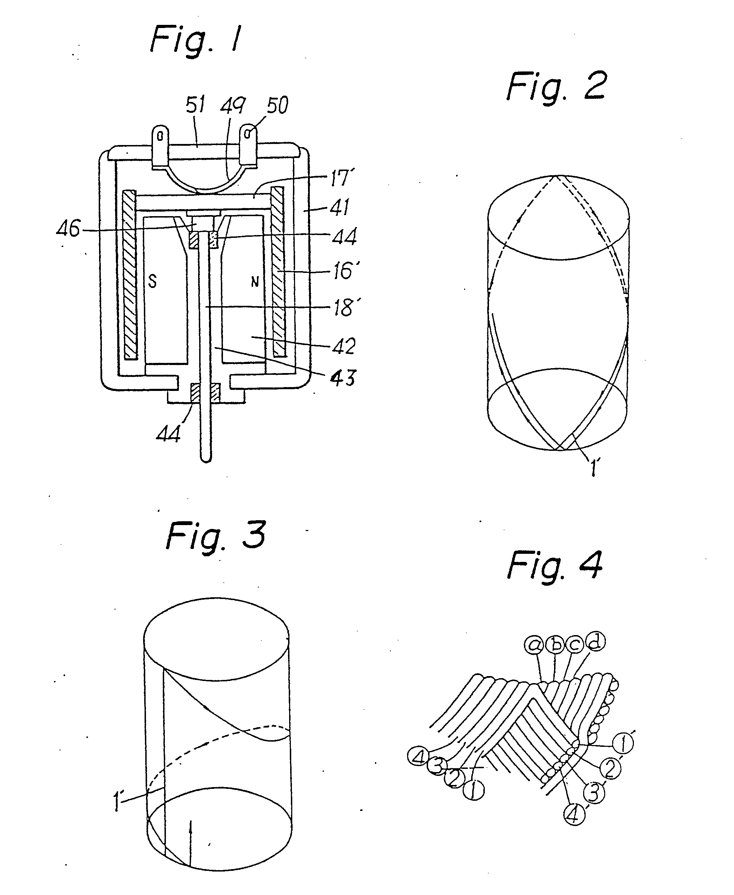

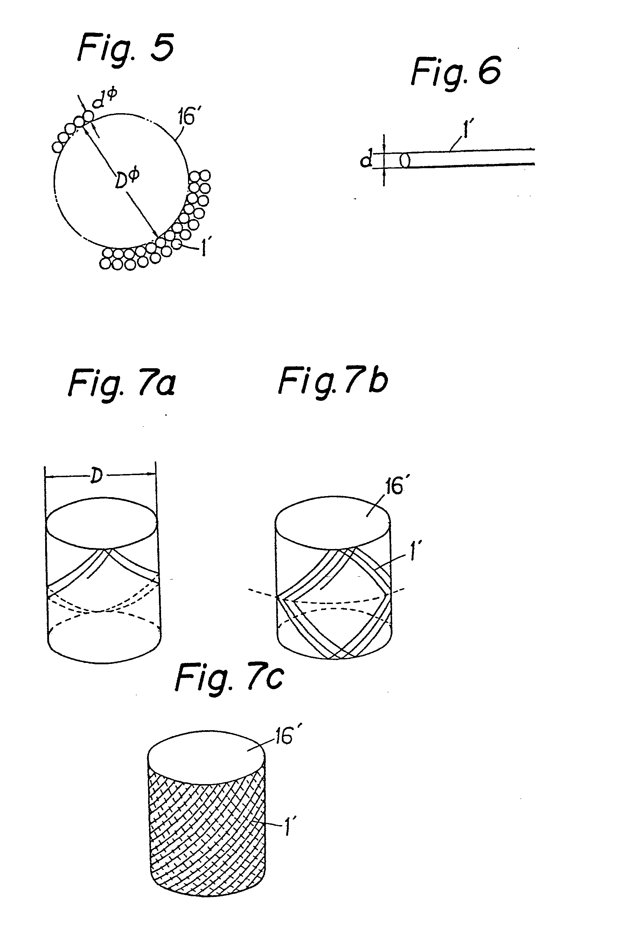

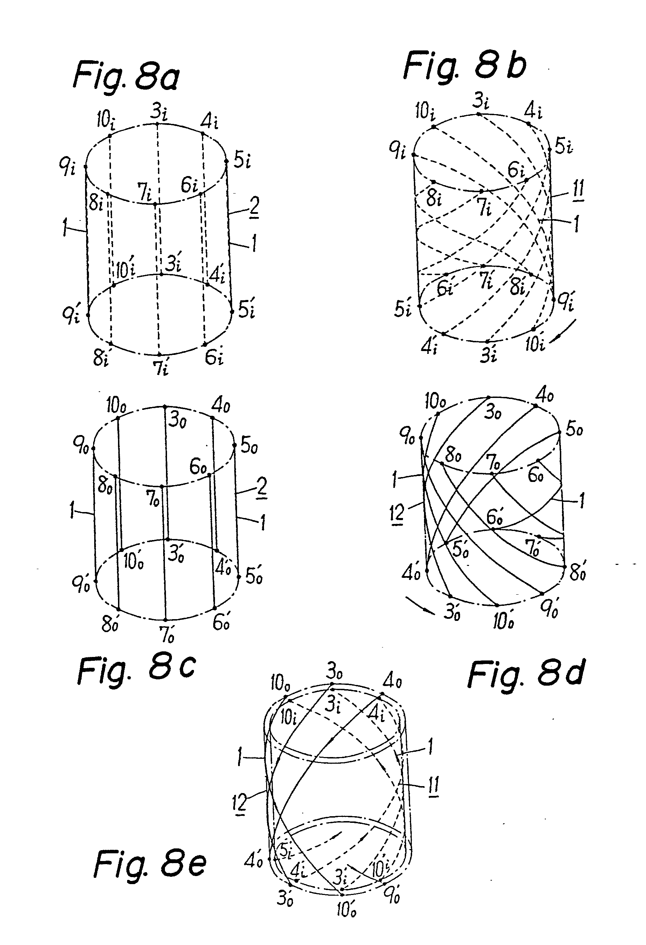

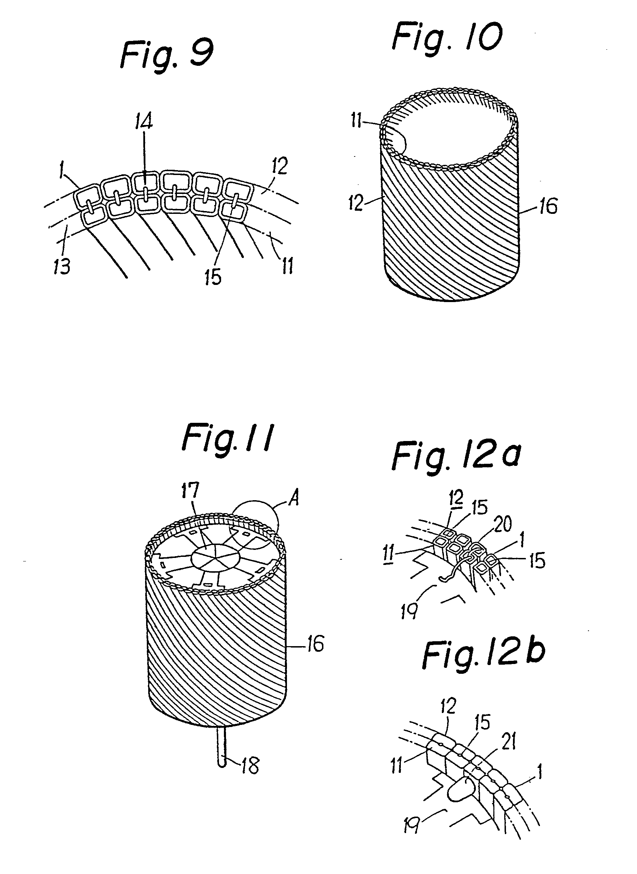

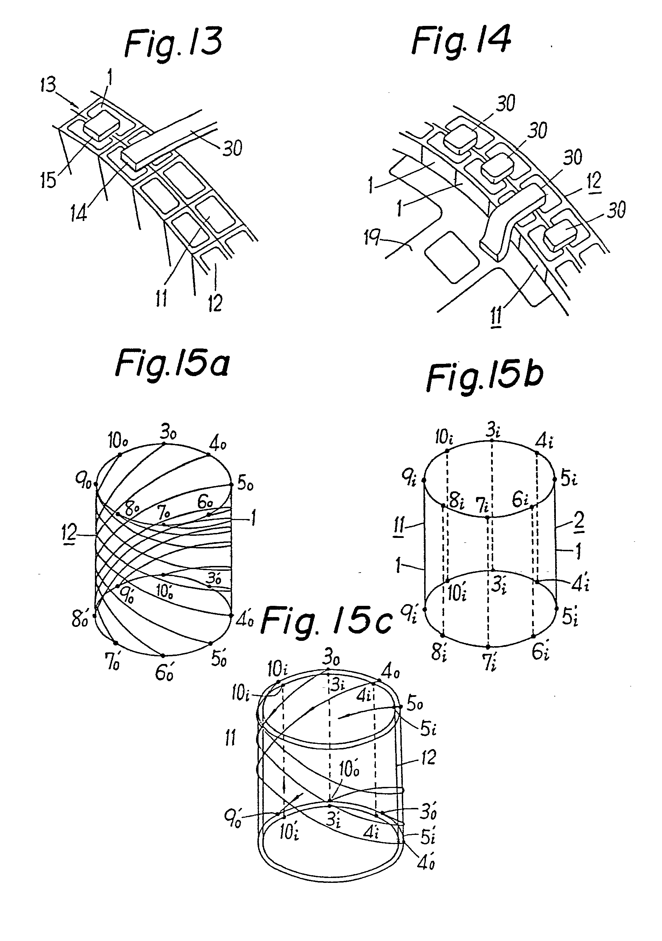

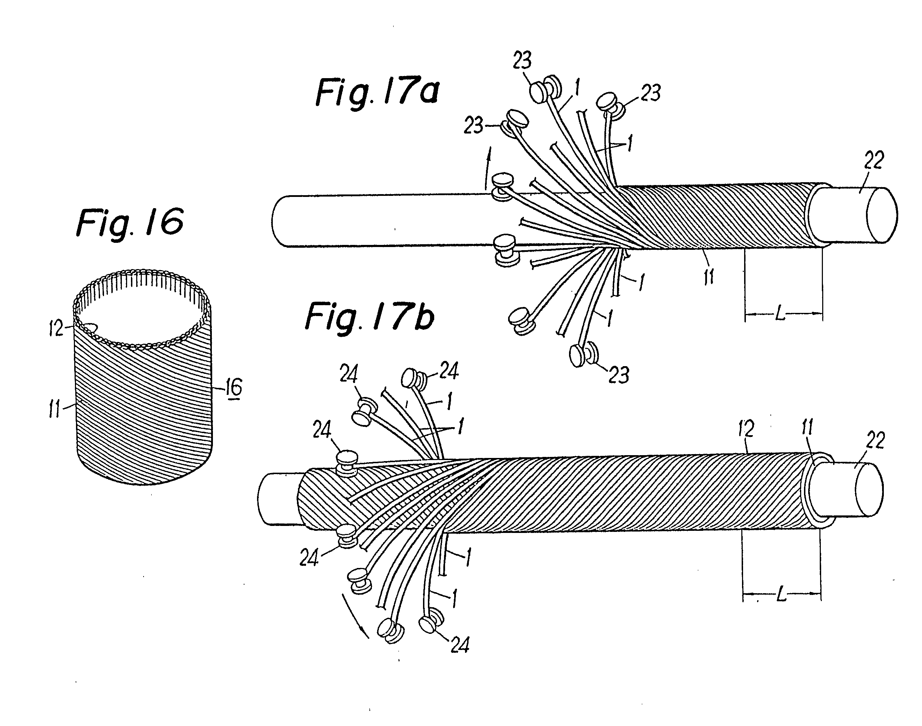

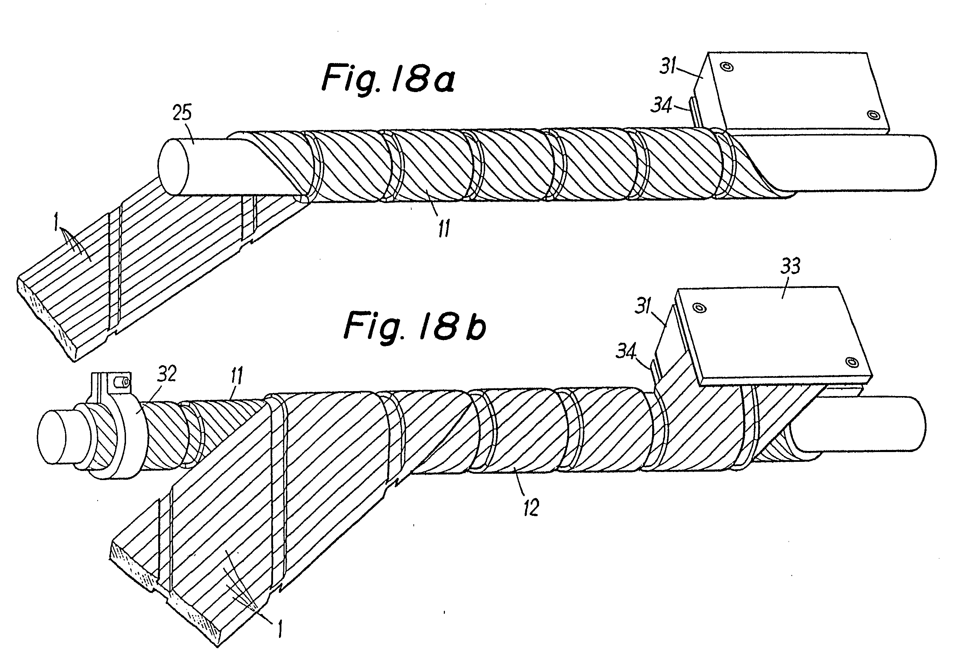

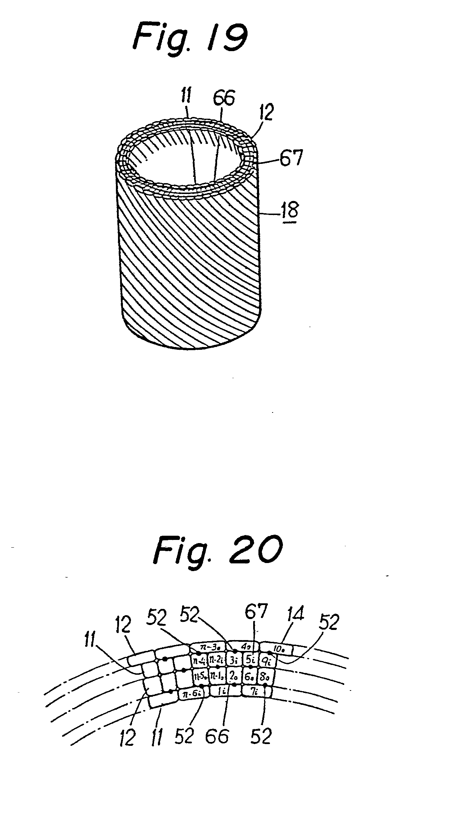

Fig. 1 is a sectioned view showing a state in which the coil unit to which the present invention relates is used; Fig. 2 is an explanatory view of a winding method in an example of a conventional coil unit of coreless armatures; Fig. 3 is an explanatory view of a winding method in another example of the same as in the above; Fig. 4 is a perspective view of an essential part of an example of a conventional coil unit of coreless armatures; Fig. 5 is a plan view schematically showing a conventional coil unit of coreless armatures; Fig. 6 is a perspective view of a conventional coil element wire; Figs. 7(a) to (c) are views of winding formations of the coil element wire; Figs. 8 to 20 are diagrams for explaining embodiments of the present invention; Figs. 8(a) to (e) are explanatory views of manufacturing steps of the coil unit in an embodiment of the present invention; Fig. 9 is a fragmentary perspective view as magnified of a joint part of the same in the above; Fig. 10 is a perspective view of the coil unit formed by the same in the above; Fig. 11 is a perspective view of an embodiment of a coreless armature obtained by the same; Figs. 12(a) and (b) are respectively a perspective view as magnified of the part A in Fig. 11 showing jointed state in an embodiment; Figs. 13 and 14 are respectively a perspective view as megnified of the part A in Fig. 11 showing jointed atate in an embodiment; Figs. 15(a) to (c) are explanatory views of manufacturing steps showing another embodiment in respect of the formation of coil unit of the present invention, Fig. 16 is a perspective view of a coil unit formed by the same in the above; Figs. 17(a) and (b) are perspective views showing a practical method of forming the coil unit; Figs. 18(a) and (b) are perspective views showing another practical method of forming the coil unit; and Figs. 19 and 20 are views showing still another embodiment in respect of the formation of a coil unit of the present invention, wherein Fig. 19 is a perspective view and Fig. 20 is a schematic plan view thereof.

The coil unit of the kind referred to is used in such manner of following descriptions as, for example, in a state of use (Fig. 1) of the coil unit according to the present invention.

That is, the direct current miniature motor has such a composition that a stator is formed by rendering a yoke 41 integral by means of a synthetic resin 43 with a cylindrical permanent magnet 42 provided within the yoke 41 as separated from the inner peripheral surface of the yoke 41, a coreless armature is formed by fixing a coil unit 16' at its upper end to a commutator plate 17' coupled through a metal boss 46 to a shaft 18' which is pivoted as passed with bearings 44 interposed through the permanent magnet 42, and further a brush plate 51 having terminals 50 connected to brushes 49 is fixed to the open end of the yoke 41.

General ones of conventional coil unit of the coreless armatures have been formed by winding a coil element wire into a barrel-shape with a coil winding machine and subjecting it to a forming into a cylindrical form.

As in Fig. 2 or 3, these coil units of the coreless armatures have been formed by winding a single coil element wire 1' sequentially in the directions indicated by arrows so as to be diamond-shaped or tapered and shaping it into the cylindrical shape by causing a coating of the coil element wire to adhere integrally without requiring an iron core. There have been such defects that, as it is necessary to wind up the coil unit with a single winding to the last, it must be made one by one and, therefore, the productivity is low; as the coil element wire is wound up as inclined, overlapped parts increase with advances of the winding and the diameter will partly increase to cause the diameter of the coil unit to be partly varied, so that only the one of which the coil wire length per turn is non-uniform and having a poor dynamic balance can be obtained; and, when the coil element wire is flat, the wire cannot be freely bent as twisted so that a coil unit of coreless armatures of the flat coil element wire in section and small coil thickness cannot be obtained.

Causes of the poor dynamic balance and appearance shall be explained more in detail with reference to Fig. 4.

Fig. 4 is a perspective view of an essential part of an example of the conventional coil unit of coreless armatures.

According to the winding formation shown in Fig. 2, first, as has been disclosed, the winding of the coil element wire is made in the order of ⓐ, ⓑ, ⓒ, and ⓓ in close contact as in Fig. 4 and is terminated in the order of ④, ③, ②, and ① after making one rotation along the circumference as overlapped on the wire previously wound, the coil element wire parts ⓐ, ⓑ, ⓒ, and ⓓ are held by turning parts ④', ③', ②', and ①' of ④, ③, ②, and ① and both groups are adhered to be integral.

While further, the parts ④ and ④' of the coil element wire are held by the later wound parts ③, ② and ①, the parts ③ and ③' are held by the parts ② and ① and the parts ② and ②' are held by the part ①, the coil element wire parts ① and ①' will no longer have any coil element wire which holds them from above when the turning part of the wire ① and ①' is the last one, and this part is left in a state likely to float up (or to be easily separated). As a result of the foregoings, the coil unit obtained is to be poor in the dimensional precision of the inner and outer diameters and also in the appearance.

Further, there have been such defects that, as the wire parts ①', ②', ③', and ④' are interposed between the wire parts ⓐ, ⓑ, ⓒ and ⓓ exposed below the above-overlapping wire parts ①, ②, ③ and ④ and a compression in the surfatial direction is required for making the thickness of the coil unit constant, they are caused to be abruptly bent in the overlapping parts as in Fig. 4 to become poor in the balance and, at the same time, the coil element wire is subjected to a severe work.

The reason why the designing of miniature direct current motor has been made inflexible shall be explained next with reference to Figs. 5 to 7.

Fig. 5 is a plan view schematically showing a conventional coil unit of coreless armatures, and Fig. 6 is a view showing winding structure of the conventional coil element wire.

Once the wire diameter of the coil element wire 1′ is determined in this conventional cylindrical coil, the number of turns has to be limited in relation to the diameter of the coil unit 16′ and such characteristics as the torque, number of revolutions and the like of the motor will not be able to be improved, thereby the designing of the motor has been made inflexible and, in order to improve the characteristics of the motor, the wire diameter of the coil element wire 1′ has had to be varied. In the case where, for example, as in Figs. 5 to 7, the wire diameter of the wire 1′ is made to be d and this wire 1′ is wound by a winding method shown in Fig. 7(a) to form a coil unit 16′ of a diameter D with a winding angle θ of the wire 1′ with respect to an end edge of the coil unit 16′, the number of turns N is represented by $N=\pi(p+d)\sin\theta/d$, the magnetic flux of the coil unit 16′ is determined by the number of turns N and, therefore, the torque and number of revolutions of the motor are limited by the wire diameter d of the coil element wire 1′.

Further, from GB—A—714,677, GB—A—1,051,467 and US—A—3,259,768, it is known to make coreless coil units comprising wire sections forming a hollow cylindrical shape with at least a couple of inner and outer layers in each of which a plurality of the wire sections are arranged side by side while running between both axial ends of the cylindrical shape, the wire sections in one of the inner and outer layers being electrically connected at the respective axial ends to the radially adjacent axial ends of the wire sections in the other layer in such a manner that a single coil is formed.

Said known coil units are made from flat non-insulated conductor strips arranged in two layers with an insulating layer between them.

The first of the objects of the present invention is to obtain a coil unit of coreless armatures which can be manufactured without the so-called winding step to make it possible to achieve a sequential mass-production, and which is large in the freedom of coil pattern, uniform in the wire length of the coil element wire per turn and excellent in the dynamic balance and commutating wave form.

The second of the objects of the present invention is to provide a coil unit for miniature motors of the like wherein the number of turns can be increased while maintaining the cross-sectional area of the coil element wire to be constant by using a flat coil element wire and various characteristics of the motor can be improved.

In the coil unit of coreless armature according to the present invention, each of the wire sections consists of a conductor having an insulation coating, and the wire sections contact each other in the radial and circumferential direction. Said conductor in the respective wire section is exposed endwise at the both axial ends in the inner and outer layers and said electrical connection at the respective axial ends consists of fused nugget of said exposed conductor with said insulation coating removed as evaporated at portions of said nuggets.

Said electrical connection may further consist of an auxiliary connecting member bridging as welded over respective said nuggets.

Preferably the direction in which respective said wire sections run between the both axial ends is diagonal with respect to the axis of the cylindrical shape at least in one of the layers.

The basis of the present invention shall be first explained with reference to Figs. 8 to 16.

Figs. 8(a) to (e) are explanatory views of steps of manufacturing the coil unit of an embodiment of the present invention.

As the first step, eight coil element wires 1 are arranged in the axial direction on a cylindrical surface so as to form a pipe shape at a flat pitch and not to overlap on each other, and a straight cylindrical coil 2 (shown in Fig. 8(a)) wherein respective one ends of the wires 1 are indicated as 3i to 10i and the other ends are as 3i′ to 10i′ is twisted clockwise by 180 degrees at one surface of the ends 3i to 10i to form a spiral inner cylindrical coil 11 (shown in Fig. 8(b)).

Then, as the second step, such spiral outer cylindrical coil 12 as shown in Fig. 8(d) (in this outer cylindrical coil 12, the straight cylindrical coil 2 (shown in Fig. 8(c)) respective one ends of the wires 1 of which are indicated as $3_o$ to $10_o$ and the other ends of the wires of which are as $3_o′$ to $10_o′$ is twisted at one end surface by 180 $(1-2/8)=135$ degrees in a direction reverse (counterclockwise) to that of the inner cylindrical coil 11) is wound with the inner cylindrical coil 11 as a core member.

The respective surfaces of the wire ends $3_o′$ to $10_o′$ and $3i′$ to $10i′$ and of $3_o$ to $10_o$ and $3i$ to $10i$ are associated with each other so as to overlap in the radial directions of the cylinder as in Fig. 8(e). In the drawings, the inner cylindrical coil 11 is shown by dotted lines but there is no meaning of distinguishing it from the outer cylindrical coil 12.

The coil element wire 1 having started from $3i$ of the inner cylindrical coil 11 reaches $3i′$ of the other end of the coil element wire 1, $3i′$ is connected to $10_o′$ of the outer cylindrical coil 12, it reaches from $10_o′$ to $10_o$, $10_o$ is connected to $10i$, and such connections are sequentially made so as to eventually form one closed loop.

Fig. 15 shows another embodiment in respect of the forms of the inner and outer cylindrical coils 11 and 12.

Figs. 15(a) to (c) are explanatory views of manufacturing steps showing said another embodiment in respect of the form of the coil unit of the present invention, and Fig. 16 is a perspective view of the coil unit formed by the foregoing.

An outer cylindrical coil 12 of Fig. 15(a) is twisted by 360 (1−1/8)=315 degrees counterclockwise and is combined as in Fig. 15(c) with an inner cylindrical coil 11 of a twisting angle of 0 degree formed of such straight cylindrical coil 11 as in Fig. 15(b) and overlapped parts are sequentially jointed in the same manner as in Fig. 8(e) to form an electrically closed loops with the outer cylindrical coil 12 and inner cylindrical coil 11, and such coil unit 16 as in Fig. 16 is obtained. This can be simply formed as the inner cylindrical coil 11 is not twisted.

In order that the coil element wire 1 may form the sequentially closed loops, further, the following conditions must be satisfied:

That is, it is necessary that the coil element wires 1 forming the inner cylindrical coil 11 and outer cylindrical 12 are respectively of the same number and are parallelly arranged on cylindrical surfaces without overlapping on each other, and that, when the outer cylindrical coil 12 is combined with the inner cylindrical coil 11, the respective coil element wires 1 of the outer cylindrical coil 12 overlap in the radial directions on the respective coil element wires 1 of the inner cylindrical coil 11 at the respective ends.

When the coil element wires 1 are twisted in directions reverse to each other to form the inner and outer cylindrical coils 11 and 12 and they are combined and fitted with each other, the coil element wires 1 of the outer cylindrical coil 12 are not arranged so as to be point-symmetrical with the coil element wires 1 of the inner cylindrical coil but are fitted so that the coil element wires 1 will shift by an amount of one wire at one end. For example, the coil element wires 1 are twisted by 180 degrees to form the inner cylindrical coil 11 and by 180 (1±2/n) degrees to form the outer cylindrical coil 12.

The third step shall be explained next with reference to Figs. 9 to 14.

Fig. 9 is a fragmentary perspective view as magnified of joint parts of the coil unit, Fig. 10 is a perspective view of the coil unit, Fig. 11 is a perspective view of a coreless type armature, and Fig. 12 is a perspective view as magnified of the part A in Fig. 11.

That is, at the third step, the overlapping parts 13 of the respective coil element wires 1 in the inner and outer cylindrical coils 11 and 12 are jointed sequentially by means irradiations of a laser beam 14 indicated by the arrow as in Fig. 9 to form an electrically closed loops with the outer cylindrical coil 12 and inner cylindrical coil 11.

In jointing them by using the laser beam, when a pulse laser of a pulse width of several m Sec is adopted for the laser beam 14, the insulating film of the coil element wires which are adjacent to each other in the radial direction is evaporated and removed without damaging the insulating film of the wires 1 adjacent in the circumferential direction, whereby the overlapping parts on the end edge surface are welded to form welding nugget the inner and outer cylindrical coils 11 and 12 can be electrically conducted and such coil unit 16 as in Fig. 1 can be formed. In order to prevent any short-circuiting from occurring between the coil element wires 1 adjacent to each other in the circumferential directions due to fins produced on the periphery of cut end surfaces of the coil element wires 1, in this case, it will be further effective to remove the fins electrochemically or chemically. As in Fig. 11, commutators 17 and shaft 18 are secured to this coil unit 16 and a coreless type armature is obtained. Fig. 12(a) is a perspective view as magnified of the part A in Fig. 11, wherein the coil element wire 1 is connected to a commutator segment 19 through a jumper wire 20, and Fig. 12(b) is of the coil element wires 1 connected by a soldering 21, either of which method may be well taken.

Whichever method may be employed, the coil element wire 1 is not insulatively coated on the end edge surface of the material of the coil unit and, therefore, can be easily connected.

Further, as in Figs. 13 and 14, in order to positively weld and joint the overlapping parts of the coil element wires 1 of the inner and outer cylindrical coil 12 and inner cylindrical coil 11, such connecting member 30 as of copper, aluminum or the like is bridged as an auxiliary connecting member on the end edge surfaces of the inner and outer coil element wires 1.

Such connecting members 30 are fed sequentially out of, for example, a hoop member so as to overlap on the end edge surfaces of the coil element wires 1.

The connecting member 30 as overlapped is welded to the inner and outer coil element wires 1. The rest of the welded connecting member 30 is removed by means of the laser beam or mechanical cutting.

The welding jointing through the connecting member 30 can be made without producing a large nugget between the inner and outer coil element wires 1.

Further, such connecting member 30 may be made somewhat longer at the inner end so as to be welded to the commutator segment with the laser beam, as in Fig. 14.

Thus the coil unit 16 as in Fig. 10 can be formed.

In this coil unit 16, too, as in Fig. 11, the commutator 17 and shaft 18 are secured to obtain a coreless armature.

The foregoings shall be explained next with reference to practical methods of the present invention.

Fig. 17(a) and (b) are perspective views showing a practical method of forming the coil units, and Figs. 18(a) and (b) are perspective views showing another practical method of forming the coil units.

Fig. 17 shows a practical manner in which the inner and outer cylindrical coils 11 and 12 are wound.

The coil element wire 1 to be used is of a self-fusing type made by insulatively coating a wire material of copper or aluminum with such synthetic resin as a polyester imide resin, ester imide resin or the like and providing such fusing layer as of a nylon series synthetic resin, epoxy series synthetic resin or the like on the surface.

For the wire material of the coil element wire 1, such a wire material that made flat or rectangular in section by a drawing or the like is recommended. It is because side surfaces of the coil element wires come into close contact with each other in the winding so as to be effective to elevate the current density and so on. Fig. 9 in the foregoing explanation shows this state.

As shown in Fig. 17(a), first, the coil element wires 1 are pulled out of coil bobbins 23 of a number "n" arranged satellitically with respect to a core metal 22, wound on the core metal 22 by rotating the coil bobbins 23 around the core metal 22 while moving them in the axial direction of the core metal so as to be twisted by 180 degrees to obtain an inner cylindrical coil 11. In such case, the core metal 22 may be rotated instead of the satellitic rotation of the coil bobbins 23. Then, as shown in Fig. 17(b), "n" coil bobbins 24 are moved in the axial direction of the core metal 22 while being rotated in the reverse direction in the same manner as in the foregoing wire winding method on the inner cylindrical coil 11 wound on the core metal 22, then the outer cylindrical coil 12 is wound, with the coil element wires 1 twisted by 180 (1±2/n) degrees on the inner cylindrical coil 11. It is of course possible to rotate the core metal 22 instead of the satellitic rotation of the coil bobbins 24, the same as in the foregoing. When the inner and outer cylindrical coils are cut into pieces for each length (L as shown in the drawing) corresponding to the twisting angle of 180 (1±2/n) degrees and are connected mutually at their ends to obtain the coil units 16.

There is shown in Fig. 18 still another practical winding method. First, as shown in Fig. 18(a), a strip-shaped tape consisting of "n" coil element wires 1 arranged in parallel is wound on a core metal 25 in a manner similar to a so-called multi-threaded screw and many cylindrical coils 11 continuously joined are obtained.

The strip-shaped tape is formed by flattening with a press working the coil element wires 1 made by coating a wire material of copper or aluminum with such synthetic resin as a polyester imide resin, ester imide resin or the like and providing a fusing layer of a nylon series synthetic resin, epoxy series synthetic resin or the like on their surface and then fusing and jointing them through the fusing layer so as to be in the form of a tape in which the "n" coil element wires 1 are arranged in parallel.

The strip-shaped tape is tightly fixed at one end with a pressing plate 34 screwed to a fixing plate 31 provided to project at one end of the core metal 25, sequentially wound up by being twisted by 180 degrees in the direction of the core metal 25 with the pressing plate 34 as a base end and fixed similarly at the terminating end to the core metal 25 with a ring-shaped band 32.

In winding up the strip-shaped tape, the winding is made by having side edge parts of the strip-shaped tape somewhat overlapped on each other to bring them into close contact with one another so that no gap will be provided between them, such solvent as acetone, alcohol or the like is applied to their abutting parts, and a heating is made as required so that the strip-shaped tape will be fused to be integral through the insulating film. In such case, the strip-shaped tape may be rotated with respect to the core metal 25 or the core metal 25 may be rotated. Then, as shown in Fig. 18(b), another strip-shaped tape consisting of "n" coil element wires 1 similarly arranged in parallel is wound on the inner cylindrical coils 11 wound on the core metal 25 as twisted by 180 (1±2/n) degrees in the form of the so-called multi-threaded screw in the direction reverse to that of the inner cylindrical coils 11 to obtain many outer cylindrical coils 12 continuously joined. In such case, too, the strip-shaped tape of coil element wires may be rotated with respect to the core metal 25 or the core metal 25 may be rotated.

The strip-shaped tape forming many cylindrical coils 12 is tightly wound and fixed at one end with a pressing plate 33 screwed onto the other side of the above referred fixing plate 31 and is wound sequentially in the direction of the core metal 25 with the pressing plate 33 as a base end. In this case, the outer cylindrical coils 12 are fitted to the base end part so that each of the coil element wires 1 of the outer cylindrical coil 12 will correspond to each of the coil element wires 1 of the inner cylindrical coils 11 in the radial direction.

The outer cylindrical coils 12 are wound up in the same manner as in the above described inner cylindrical coils 11. In winding up the outer cylindrical coil 12, such solvent as acetone, alcohol or the like is applied between the outer cylindrical coils 12 and the inner cylindrical coils 11 and they are heated as required so as to be fused to be integral with each other. They are cut into pieces for each length (L as shown in the drawing) corresponding to the twisting angle of 180 (1±2/n) degrees to obtain materials of the coil units 16.

In cutting them, it is generally convenient to mechanically cut them with a wire saw for cutting them while blowing a free hone grains near them and slightly vibrating a steel wire. If a slit is provided, removing the insulating coating at each length L shown, the combination of the inner and outer cylinders 11 and 12 can be cut into pieces of a predetermined size by means of an etching in an etching solution. If this method is adopted, the materials of the coil units 16 will not be mechanically deformed.

An example of a coil unit 18 obtained by combining the coil units 16 obtained as described above shall be explained next. Figs. 19 and 20 show the same, wherein Fig. 19 is a perspective view, and Fig. 20 is a schematic plan view.

While, as has been described above, the coil unit 16 consisting of a pair of the inner and outer cylindrical coils 11 and 12 is formed, another coil unit 16 fitting inside or outside the thus formed coil unit 16 is combined with the latter, and their overlapping parts 52 are sequentially jointed by the laser welding or the like from the innermost cylindrical coil 11 to the outermost cylindrical coil 12 to form electrically closed loops of all the cylindrical coils, whereby such a coil unit 18 having an intermediate inner cylindrical coil 66 and intermediate outer cylindrical coil 67 as in Fig. 19 is formed. As seen on one end edge surface, the overlapping parts 52 are not all jointed but are jointed at every other of them as in Fig. 20 to form a coil unit as a whole. In Fig. 20, dot mark (.) denotes jointing points, suffix "i" denotes an inner cylindrical coil, the coil element wire 1 is twisted clockwise, the suffix "o" denotes an outer cylindrical coil and the coil element wire 1 is twisted counterclockwise. Further, the numerals assigned to the end edge surfaces of the respective coil element wires 1 denote nothing but the jointing order of the coil element wires 1.

The effects of the present invention are as follows:

1) As the method of simultaneously winding a plurality of coil element wires instead of the conventional manufacturing method employing the winding machine wherein a single coil element wire is wound from the first to the last to form a single coil, the manufacturing time is reduced.

2) As the inner cylindrical coil is formed of a one-layer winding of coil element wires of an equal length arranged in parallel and an outer cylindrical coil is formed of coil element wires of an equal length arranged in parallel, the length per turn of the coil unit made by overlapping them is uniform.

3) As the coil unit made by overlapping such inner cylindrical coil of a one-layer winding and outer cylindrical coil on each other is constant in the thickness in the radial direction, the precision of the inner and outer diameters of a rotor formed of them is high, the air gap between the yoke and the magnet in which the rotor is inserted can be made smaller, which is contributive to a minimization in size of the motor.

4) Further in the coil unit of the present invention, as the coil element wires are used without being bent back, the coil unit can be formed of the coil element wires of a rectangular or flat cross-section. As the coil element wires of such rectangular or the like cross-section can be used, the cross-section of the coil element wires may be made flat in the radial direction or peripheral direction of the coil, whereby the number of turns of the coil element wires may be made variable even with the coil element wires of the same cross-sectional area used, so that motors of different characteristics can be well designed.

Further, for example, by making the cross-section of the coil element wire flat in the radial direction, a coil of a single-layered winding equal to a coil of a multi-layered winding can be obtained and, by making the cross-section of the coil element wire flat in the peripheral direction of the coil, a coil of a smaller thickness can be formed.

In a preferred mode of working of the invention, first, as shown in Fig. 18(a), a strip-shaped tape consisting of "n" coil element wires 1 arranged in parallel is wound on a core metal 25 in a manner similar to so-called multi-threaded screw to obtain many inner cylindrical coils 11 continuously joined with the coil element wires 1 twisted by 180 degrees. Then, as shown in Fig. 18(b), a strip-shaped tape consisting of "n" coil element wires 1 also arranged in parallel is wound on the inner cylindrical coil 11 wound on the core metal 25 in the form of the so-called multi-threaded screw in the direction reverse to that of the inner cylindrical coils 11 obtain many outer cylindrical coils continuously jointed with the coil element wires 1 twisted by 180 $(1\pm2/n)$. Then, they are cut into pieces at every length (L as shown in the drawing) corresponding to the twisting angle of 180 $(1\pm2/n)$ degrees to obtain materials of coil units 16.

Next, as the third step, overlapping parts 13 of the respective coil element wires 1 of the outer cylindrical coil 12 and inner cylindrical coil 11 are jointed sequentially by irradiations of laser beam 14 shown by the arrow in Fig. 9 to obtain a coil unit 16 forming an electrically closed loop of the outer cylindrical coil 12 and inner cylindrical coil 11.

As in Fig. 11, a commutator 17 and shaft 18 are secured to this coil unit 16 and a coreless armature is obtained.

**Claims**

1. A coil unit of a coreless armature comprising wire sections forming a hollow cylindrical form with at least an inner and an outer layer (11, 12) in each of which a plurality of the wire sections are arranged side by side while running between both axial ends of the cylindrical form, the wire sections in one of the inner and outer layers being electrically connected at the respective axial ends to the radially adjacent axial ends of the wire sections in the other layer in such a manner that a single coil is formed, characterized in that each of the wire sections consists of a conductor having an insulating coating, and in that the wire sections contact each other in the radial and circumferential directions wherein said conductor in each respective wire section is exposed at both axial ends (3i—10i, 3i'—10i'; 3o—10o, 3o'—10o') in the inner and outer layers (11, 12) and said electrical connection at the respective axial ends consists of a fused nugget (15) of said exposed conductor with said insulating coating removed from the wire by evaporation at said nuggets.

2. A coil unit according to claim 1, characterized in that said electrical connection further consists of an auxiliary connecting member (30) bridging as welded over respective said nuggets (15).

3. A coil unit according to claim 1, characterized in that the direction in which respective said wire sections run between the both axial ends is diagonal with respect to the axis of the cylindrical form at least in one of the layers (11, 12).

**Patentansprüche**

1. Spuleneinheit für einen kernlosen Anker mit Drahtabschnitten, die eine hohlzylindrische Form bilden, mit mindestens einer Innen- und einer Außenlage (11, 12), wobei in jeder dieser Lagen mehrere Drahtabschnitte nebeneinander angeordnet sind, während sie sich zwischen den beiden axialen Enden der Zylinderform erstrecken, wobei die Drahtabschnitte in einer der Innen- und Außenlagen an den jeweiligen Axialenden mit den radial anschließenden Axialenden der Drahtabschnitte in der anderen Lage elektrisch so verbunden sind, daß eine einzige Spule entsteht, dadurch gekennzeichnet, daß jeder der Drahtabschnitte aus einem Leiter mit einer Isolierbeschichtung besteht, und daß die Drahtabschnitte sich einander in radialer Richtung und in Umfangsrichtung berühren, wobei der genannte Leiter in jedem Drahtabschnitt an beiden Axialenden (3i—10i, 3i'—10i', 3o—10o, 3o'—10o') in den Innen- und Außenlagen (11, 12) blank ist, und daß die genannte elektrische Verbindung an den jeweiligen Axialenden aus einer geschmolzenen Perle (15) des genannten blanken Leiters besteht, dessen Isolierung vom Draht durch Verdampfen an den genannten Perlen entfernt wurde.

2. Spuleneinheit gemäß Anspruch 1, dadurch gekennzeichnet, daß die genannte elektrische Verbindung ferner aus einem Hilfsverbindungsglied (30) besteht, das über der jeweiligen geschmolzenen Perle (15) angeschweisst ist und diese überbrückt.

3. Spuleneinheit gemäß Anspruch 1, dadurch gekennzeichnet, daß die Richtung, in der die genannten Drahtabschnitte zwischen den beiden Axialenden verlaufen, diagonal gegenüber der Achse der Zylinderform wenigstens in einer der genannten Lagen (11, 12) ist.

**Revendications**

1. Elément de bobine pour un induit sans noyau, comprenant des sections de fil conformées en cylindre creux et comportant au moins une couche intérieure et une couche extérieure (11, 12), formée chacune d'une pluralité de sections de fil disposées côte à côte et s'étendant entre les deux extrémités axiales du cylindre, les sections de fil de l'une des couches intérieure et extérieure étant reliées électriquement, à leurs extrémités axiales, aux extrémités axiales radialement adjacentes des sections de fil de l'autre couche, de manière à constituer une seule bobine, caractérisé en ce que chaque section de fil comprend un conducteur pourvu d'un revêtement isolant et en ce que les différentes sections de fil sont en contact entre elles dans les directions radiale et périphérique, ledit conducteur de chaque section de fil respective étant dénudé aux deux extrémités axiales (3i—10i, 3i'—10i'; 3o—10o, 3o'—10o') des couches intérieure et extérieure (11, 12) et ladite connexion électrique pratiquée aux extrémités axiales respective étant constituée d'un point de fusion (15) entre lesdits conducteurs dénudés, résultant de l'élimination du revêtement isolant du fil par évaporation aux emplacements desdits points de fusion.

2. Elément de bobine selon la revendication 1, caractérisé en ce que ladite connexion électrique est constituée, en outre, d'un élément de connexion auxiliaire (30), soudé en pont au-dessus desdits points de fusion (15) respectifs.

3. Elément de bobine selon la revendication 1, caractérisé en ce que lesdites sections de fil respectives s'étendent entre les deux extrémités axiales, au moins dans l'une des couches (11, 12), suivant une direction en diagonale par rapport à l'axe de la formation cylindrique.

0 063 603

*Fig. 1*

*Fig. 2*

*Fig. 3*

*Fig. 4*

1

## Fig. 5

## Fig. 6

## Fig. 7a

## Fig. 7b

## Fig. 7c

Fig. 8a

Fig. 8 b

Fig. 8 c

Fig. 8d

Fig. 8e

Fig. 9

Fig. 10

Fig. 11

Fig. 12a

Fig. 12b

0 063 603

Fig.13

Fig.14

Fig.15a

Fig.15b

Fig.15c

5

*Fig. 16*

*Fig. 17a*

*Fig. 17b*

Fig. 18a

Fig. 18b

## Fig. 19

## Fig. 20